# EUROPEAN PATENT APPLICATION

(11) **EP 1 035 463 A1**
(43) Date of publication of application: **13.09.2000**
(21) Application number: 99301861.3
(22) Date of filing: 11.03.1999
(51) Int. Cl.: G06F 3/00, G06F 1/16

(54) **Device for indicating relative location to a user**

(71) Applicant: BRITISH AEROSPACE PUBLIC LIMITED COMPANY, Farnborough, Hampshire GU14 6YU (GB)
(72) Inventor: The designation of the inventor has not yet been filed
(74) Representative: Rooney, Paul Blaise

(57) **Abstract**

A device (2) includes one or more carriers (3) such as a band or belt removably attachable to a user (1) one or more vibro tactile stimulator sources (5) located on the carrier or carriers (3) preferably so that in use they are located at positions on the user corresponding substantially to front, rear, left side and right side respectively, which sources (5) are connectable to a control unit separate from the user (1) for monitoring the location of the user and for exciting the appropriate source or sources (5) nearest to the direction in which the user should move.

## Description

This invention relates to a device for indicating to a user the location of the user relative to a reference point or an object and/or the location of an object relative to the user. Preferably, but not exclusively, such a device may be employed in a controlled environment such as a virtual reality environment and preferably in conjunction with apparatus for monitoring the user location.

In the real world a human being may in some situations become disorientated due to inability of his senses to make a correct assessment of environmental stimuli. For example, in a smoke filled room a human being may become confused as to the location of an exit. In other controlled environments such as in a virtual reality environment, human sensory feedback is poor and this significantly hinders the interaction of a virtual reality user. Normal human binocular vision has a visual field of view of approximately 200° along the horizontal axis whereas even expensive virtual reality head mounted displays generally reduce this field of view to about 120°. Average head mounted virtual reality displays can only offer a diagonal field of view of up to 40° or 60°. This excessive loss of field of view affects the virtual reality environment user as in order to see the equivalent real world visual area the user has to make many head movements to change his viewpoint. This reduction in the visual field of view coupled with the need to make frequent head movements generally reduces the focus of attention and it becomes very easy to lose track of objects that are out of view.

There is thus a need for a device for indicating to a user the location of the user relative to a reference point or an object and/or the location of an object relative to the user which reduces the disorientating effect of being in an environment in which the user's visual senses are impaired.

According to a first aspect of the present invention there is provided a device for indicating to a user the location of the user relative to a reference point or an object and/or the location of an object relative to the user, including one or more carriers means removably attachable to the user, one or more vibro tactile stimulator sources located on the carrier or carriers, which sources are connectable to a control unit separate from the user for monitoring, when the carrier or carriers is/are attached to a user, the location of the user relative to the reference point or the position of the user relative to the object and exciting the appropriate source nearest to the direction of the reference point or object relative to the user to indicate vibro tactiley to the user the direction of the reference point or object.

Preferably the device includes at least four vibro tactile stimulator sources so located on the carrier or carriers that, in use, with the carrier or carriers attached to the user, the sources are located at positions on the user corresponding substantially to front, rear, left side and right side respectively.

Conveniently the device includes more than four vibro tactile stimulator sources with the additional vibro tactile simulator sources being so located on the carrier or carriers at positions which in use on the user correspond to above and below the user.

Advantageously the or each vibro tactile stimulator source is a piezo-electric buzzer, a solenoid actuated vibratory pin, a voice coil or a shape memory alloy vibratory pin.

Preferably the or each carrier is a belt or band attachable to the head, neck, body, arms and/or legs of the user.

Conveniently the device includes at least one tracking sensor attached to the carrier or carriers and operable to provide a user location signal to the control unit.

According to a further aspect of the present invention there is provided apparatus including a control unit for monitoring the location of a user and indicating to the user the location of the user relative to a reference point or an object and/or the location of an object relative to the user and an indicating device according to the present invention for indicating location to the user.

For a better understanding of the present invention, and to show how the same may be carried into effect, reference will now be made, by way of example, to the accompanying drawings, in which;
Figure 1 is a diagrammatic perspective view of a device according to one embodiment of the present invention,
Figure 2 is a diagrammatic view of a user viewed from the front provided with a number of devices according to the present invention,
Figure 3 is a diagrammatic view from above of the head of a user fitted with a device according to the present invention, and
Figure 4 is a diagrammatic view from above of the head of a user fitted with a device according to a further embodiment of the present invention.

As shown in the accompanying drawings a device of the present invention is intended for indicating to a user 1 the location of the user relative to a reference point (not shown such as an exit point for a room) or an object (not shown such as breathing apparatus) and/or the location of an object (not shown such as the breathing apparatus or a spanner) relative to the user. The device generally indicated at 2 may be used in a real environment such as to indicate the direction of an exit from a smoke filled room or in a virtual reality environment such as to indicate the direction of a spanner relative to the user of the virtual reality equipment.

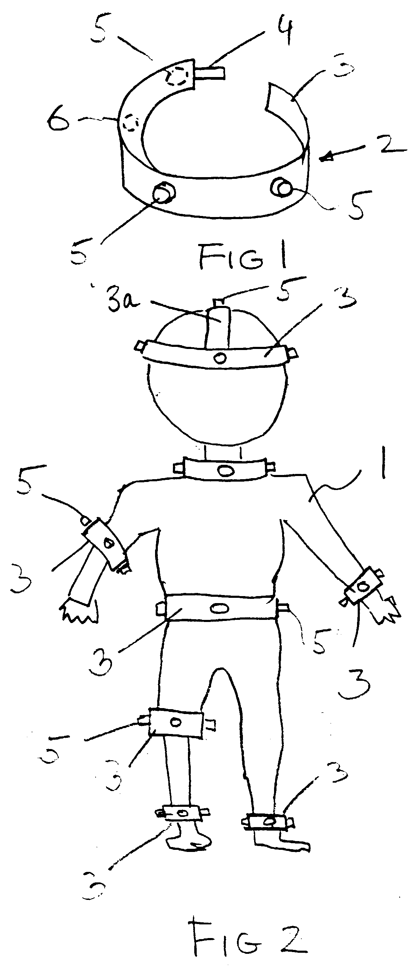

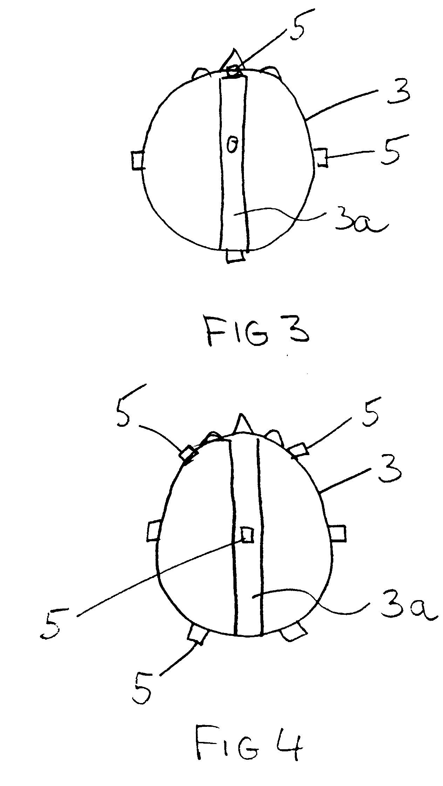

To supplement the visual senses of the user which are impaired or restricted by the real or virtual reality environment in which the user is operating, it is necessary to provide a form of feedback to other more under-utilised senses of the user. In this invention tactile feedback is utilised. To this end the device includes one or more carriers 3 preferably in the form of a band or belt attachable to the user in any convenient manner such as by means of straps 4 and appropriate fasteners not shown. Velcro (™ )strips can be used in place of the straps. The carrier 4 can be attached to the user at any convenient position such as to the head, neck, arm, wrist, waist, leg or ankle as illustrated in Figure 2.

The device 2 also includes one or more, preferably four, vibro tactile simulator sources 5 located on the carriers 3 so that, when at least four sources 5 are employed, and in use with the carrier 3 attached to the user 1 the sources 5 are located at positions on the user corresponding substantially to front, rear, left side and right side respectively of the user. This location can be seen from Figures 2, 3 and 4. In Figures 2 and 3 the sources 5 are located at the front, rear, left side and right side of the user. In Figure 4 the carrier 3 carries six sources 5 located at substantially 45° separations so that direction can be indicated with a finer degree of control. For example in the Figure 4 embodiment there are two sources located at the front of the user on the head thereof both of which can be excited together to indicate a direction forward of the user or one of which only can be excited to indicate direction forward and to the right or forward and to the left of the user. Additionally in the carrier 3 of Figures 2, 3 and 4 a further source is provided attached to a strap or band 3a which passes over the top of the head of the user and which carries an additional vibro tactile stimulator source 5 to indicate a direction above the user. If necessary further carrier means band can be provided to pass under the chin of the user to carry yet another vibro tactile stimulator source 5 located under the chin to indicate direction downwardly of the user.

The sources 5 can be of any convenient form such as a piezo electric buzzer, a solenoid actuated vibratory pin or a voice coil operable in response to command signals such as electro magnetic radiation, when in contact or close to the skin of the user to provide a vibro tactile stimulation signal to the skin of the user. Alternatively the sources 5 can employ shape memory alloys utilized to create a single or matrix array of pins which can be driven to provide tactile feedback. For example, when energized the pin moves away from its resting position so that when the alloy is driven with a waveform signal it enables the pin to oscillate between on and off states to provide vibration.

The number of sources 5 on the or each carrier 3 and the number of carriers 3 utilised should be as many as is required to meet the user operating conditions. For example the closer together the sources 5 on the carrier 3 are located the stronger the vibro tactile message received by the user. Similarly by placing carriers 5 on as many locations of the user as possible it is also feasible to increase the intensity of the vibro tactile simulator source message provided to the user thereby allowing for redundancy if one or other of the sources is inoperable or emphasising the message if the senses of the user are becoming dulled or tired.

The device of the invention is intended to operate with a control unit (not shown) to which the sources 5 are connected or linked in any convenient manner. The control unit is separate from the user in operation and preferably is located outside the virtual reality or real world environment in which the user is operating. This control unit is operable to monitor the location of the user relative to the reference point or the position of the user relative to the object and can excite the appropriate source 5 nearest to the direction of the reference point or object relative to the user to indicate vibro tactiley to the user the direction of the reference point or object. The device as previously described works most satisfactorily if the user is fixed in space. This is limited in capability and to improve operation of the device it is necessary to track the user spatially. To assist in tracking the user spatially the device includes at least one tracking sensor 6 attached to the or each carrier 3 and operable to provide a user location signal to the control unit 4. The tracking sensor 6 can be of any convenient form such as a mechanical linkage, a light based sensor such as a visual or infrared sensor, a laser sensor, an ultrasonic sensor, an electro magnetic sensor or an accelerometer.

The control unit 4 utilises an output signal from the tracking sensor 6, which may be an active sensor or a rate gyroscope, and feeds the output signal to a comparator forming part of the unit 4. The comparator also receives an input representative of target location compares this with the input from the sensor 6 and provides an output signal to activate one or more of the sources 5.

Apparatus according to the invention includes a control unit for monitoring the location of a user and indicating to the user the location of the user relative to a reference point or an object and/or the location of an object relative to the user, and a device 2 for indicating location to the user. In use the user experiences a changing pattern of vibro tactile stimulation indicating changing direction until the user is aligned and moving towards the chosen direction. Thereafter only a single source 5 needs to be triggered to maintain the desired direction. Preferably the sources 5 are pulsed at appropriate intervals. Permanent continuous activation of the sources 5 can become distracting or alternatively the user may become habituated to the vibration and consequently disregard changes in the signal direction.

## Claims

1. A device for indicating to a user the location of the user relative to a reference point or an object and/or the location of an object relative to the user, including one or more carriers removably attachable to the user, one or more vibro tactile stimulator sources located on the carrier or carriers, which sources are connectable to a control unit separate from the user for monitoring when the carrier or carriers is/are attached to a user, the location of the user relative to the reference point or the position of the user relative to the object and exciting the appropriate source or sources nearest to the direction of the reference point or object relative to the user to indicate vibro tactiley to the user the direction of the reference point or object.

2. A device according to claim 1, including at least four vibro tactile stimulator sources so located on the carrier or carriers that, in use, with the carrier or carriers attached to the user, the sources are located at positions on the user corresponding substantially to front, rear, left side and right side respectively.

3. A device according to claim 1 or claim 2, including more than four vibro tactile stimulator sources with the additional vibro tactile simulator sources being so located on the carrier or carriers at positions which in use on the user correspond to above and below the user.

4. A device according to any one or claims 1 to 3, wherein the or each vibro tactile stimulator source is a piezo-electric buzzer, a solenoid actuated vibratory pin, a voice coil or a shape memory alloy vibratory pin.

5. A device according to any one of claims 1 to 4, wherein the or each carrier is a belt or band attachable to the head, neck, body, arms and/or legs of the user.

6. A device according to any one of claims 1 to 5, including at least one tracking sensor attached to the carrier or carriers and operable to provide a user location signal to the control unit.

7. A device for indicating to a user the location of the user relative to a reference point or an object and/or the location of an object relative to the user, substantially as hereinbefore described and as illustrated in Figure 1, Figure 2 and Figure 3 or Figure 4 of the accompanying drawings.

8. Apparatus including a control unit for monitoring the location of a user and indicating to the user the location of the user relative to a reference point or an object and/or the location of an object relative to the user and a device according to any one of claims 1 to 7 for indicating location to the user.
